# FASCICULE DE BREVET EUROPEEN

(11) **EP 3 010 736 B1**
(45) Date de publication et mention de la délivrance du brevet: **14.11.2018**
(21) Numéro de dépôt: 14729933.3
(22) Date de dépôt: 16.06.2014
(51) Int. Cl.: B60H 1/00

(54) **ELEMENT DESTINE AU REFROIDISSEMENT DE L'AIR D'UN VEHICULE AUTOMOBILE**
ELEMENT ZUR KÜHLUNG DER LUFT EINES KRAFTFAHRZEUGS
ELEMENT FOR COOLING THE AIR OF A MOTOR VEHICLE

(30) Priorité: 20.06.2013 FR 1355815
(43) Date de publication de la demande: 27.04.2016
(73) Titulaire: Valeo Systemes Thermiques, 78320 Le Mesnil-Saint-Denis (FR)
(72) Inventeur: DE PELSEMAEKER, Georges, F-78125 Poigny-la-Foret (FR); AZZOUZ, Kamel, F-75012 Paris (FR)
(74) Mandataire: Metz, Gaëlle
(86) Numéro de dépôt international: PCT/EP2014/062547
(87) Numéro de publication internationale: WO 2014/202521

(56) Documents cités:
- WO-A1-2011/142224
- DE-A1-102011 004 202
- JP-A- 2009 035 098
- JP-A- 2012 101 604
- US-A1- 2012 042 687

## Description

La présente invention concerne un élément destiné au refroidissement de l'air d'un véhicule automobile et plus particulièrement un élément au niveau d'un dispositif d'air conditionné embarqué dans un véhicule automobile comportant un matériau à changement de phase composite.

Les dispositifs d'air conditionné pour véhicule automobile comprennent généralement une boucle de climatisation dans laquelle circule un fluide caloporteur. La boucle de climatisation comporte notamment un compresseur, un premier échangeur de chaleur, une vanne d'expansion et un second échangeur de chaleur placé dans un conduit d'arrivée d'air de l'habitacle.

La boucle de climatisation, dans un mode climatisation, permet un refroidissement de l'air destiné à l'habitacle lorsque le premier échangeur de chaleur joue un rôle de condenseur et le second échangeur de chaleur joue un rôle d'évaporateur. Dans cette configuration, l'énergie calorifique prélevée par le second échangeur de chaleur à l'air destiné à l'habitacle est libérée par condensation au niveau du premier échangeur de chaleur.

Dans le cas d'un dispositif de climatisation dit réversible, l'air destiné à l'habitacle peut être réchauffé par passage de la boucle de climatisation en mode pompe à chaleur. Dans ce mode, les rôles des premier et second échangeurs de chaleur sont inversés. Le premier échangeur de chaleur joue ainsi le rôle d'évaporateur, prélevant de l'énergie calorifique à l'air extérieur. Ladite énergie calorifique est ensuite libérée au niveau du second échangeur de chaleur qui joue le rôle de condenseur et réchauffe ainsi l'air destiné à l'habitacle.

Néanmoins, sur des véhicules automobiles équipés d'un alterno-démarreur pour la mise en oeuvre d'un dispositif d'arrêt et de redémarrage automatique du moteur, l'arrêt du moteur à un feu tricolore ou à un stop, entraîne l'arrêt du fonctionnement du compresseur de la boucle de climatisation et donc un arrêt du fonctionnement de cette dernière.

Afin de prolonger le refroidissement de l'air destiné à l'habitacle en mode climatisation, il est connu d'intégrer au dispositif de climatisation un élément comportant un matériau à changement de phase composite. Lorsque la boucle de climatisation fonctionne, le matériau à changement de phase composite, à l'instar de l'air destiné à l'habitacle, cède de l'énergie calorifique au fluide caloporteur en passant en phase solide. Lorsque la boucle de climatisation est à l'arrêt, l'air destiné à l'habitacle circulant au contact du matériau à changement de phase est refroidi par ce dernier qui lui prélève de l'énergie calorifique en passant en phase liquide.

Un élément destiné au refroidissement de l'air d'un véhicule automobile, comportant un matériau à changement de phase, est connu de 2012 101604 A, qui est considéré comme l'art antérieur le plus proche. Le matériau à changement de phase composite comporte au moins un premier matériau qui est un matériau à changement de phase et un second matériau dont la structure forme une matrice de support dudit matériau à changement de phase. Le matériau à changement de phase composite est tel que grâce à sa structure composite il conserve une structure rigide quelque soit l'état solide ou liquide du matériau à changement de phase.

Cependant, l'utilisation d'un matériau à changement de phase composite peut poser des problèmes de durabilité. En effet à force d'utilisation, le matériau à changement de phase présent dans sa matrice de support peut diminuer par exemple par évaporation ou par écoulement. Cela entraine donc avec le temps, une diminution de l'efficacité dudit matériau à changement de phase composite.

Un des buts de l'invention est donc de proposer un élément destiné au refroidissement de l'air comprenant un matériau à changement de phase composite durable dans le temps et un dispositif d'air conditionné pour véhicule automobile remédiant au moins partiellement aux inconvénients de l'art antérieur.

La présente invention concerne donc une élément destiné au refroidissement de l'air d'un véhicule automobile, comportant un matériau à changement de phase composite constitué d'au moins un premier matériau qui est un matériau à changement de phase et d'un second matériau dont la structure forme une matrice de support dudit matériau à changement de phase, ledit matériau à changement de phase composite étant recouvert d'une couche de protection thermo-conductrice, et le matériau à changement de phase composite comportant en son sein au moins un renfort de structure rigide.

Le fait que le matériau à changement de phase composite soit recouvert d'une couche de protection thermo-conductrice empêche la fuite du matériau à changement de phase que se soit par écoulement ou par évaporation. De plus, Le fait que la couche de protection soit thermo-conductrice permet de conserver un bon échange thermique entre le flux d'air passant au contact du matériau à changement de phase composite et le matériau à changement de phase.

Selon un aspect de l'invention, la couche de protection est un traitement de surface oleophobe et hydrophobe de nanoparticules hybrides organiques/inorganiques.

Selon un autre aspect de l'invention, la couche de protection est un film métallique à haute conductivité thermique.

Selon un autre aspect de l'invention, la couche de protection est une couche évaporative de polymère thermo-conducteur.

Selon un autre aspect de l'invention, le renfort de structure rigide est une armature métallique.

Selon un autre aspect de l'invention, le un renfort de structure rigide est une armature plastique.

La présente invention concerne également un dispositif d'air conditionné pour véhicule automobile comportant une boucle d'air conditionné comprenant un premier échangeur de chaleur en contact avec l'air extérieur et un second échangeur de chaleur placé dans un boitier de climatisation, ledit dispositif comprenant au moins un élément destiné au refroidissement de l'air tel que décrit précédemment, ledit élément étant placé au niveau du diffuseur d'air dans l'habitacle.

Selon un aspect du dispositif d'air conditionné selon l'invention, au moins un élément destiné au refroidissement de l'air forme une grille de diffusion à la sortie du diffuseur d'air dans l'habitacle.

Selon un autre aspect du dispositif d'air conditionné selon l'invention, au moins un élément destiné au refroidissement de l'air forme des volets d'orientation et/ou de fermeture du flux d'air arrivant dans l'habitacle.

D'autres caractéristiques et avantages de l'invention apparaîtront plus clairement à la lecture de la description suivante, donnée à titre d'exemple illustratif et non limitatif, et des dessins annexés parmi lesquels :
- la figure 1 montre une représentation schématique d'un dispositif d'air conditionné pour véhicule automobile selon un premier mode de réalisation,
- les figures 2a et 2b montrent une représentation schématique en coupe de la structure du matériau à changement de phase composite, la figure 2a correspondant à un mode de réalisation n'appartenant pas à l'invention, et la figure 2b correspondant à un mode de réalisation suivant l'invention.
- la figure 3 montre une représentation schématique d'un dispositif d'air conditionné pour véhicule automobile selon un deuxième mode de réalisation,
- la figure 4 montre une représentation schématique d'un dispositif d'air conditionné pour véhicule automobile selon un troisième mode de réalisation,
- la figure 5 montre une représentation schématique d'un dispositif d'air conditionné pour véhicule automobile selon un quatrième mode de réalisation,
- la figure 6 montre une représentation schématique d'un dispositif d'air conditionné pour véhicule automobile selon un cinquième mode de réalisation, et
- la figure 7 montre une représentation en perspective éclatée d'un diffuseur d'air dans l'habitacle.

Sur les différentes figures, les éléments identiques portent les mêmes numéros de référence.

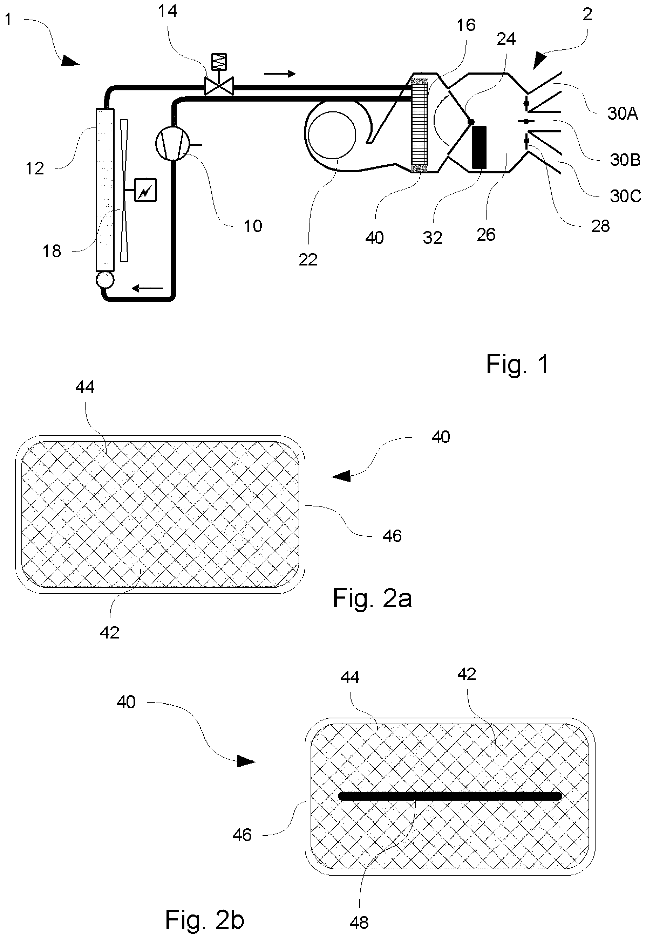

La figure 1 montre une représentation schématique d'un dispositif d'air conditionné 1. Ledit dispositif d'air conditionné 1 comporte une boucle de climatisation dans laquelle circule un fluide caloporteur et comprenant un premier échangeur de chaleur 12, une vanne d'expansion 14, un second échangeur de chaleur 16 et un compresseur 10.

Le premier échangeur de chaleur 12 peut être placé au contact de l'air extérieur du véhicule, par exemple au niveau de la face avant. Ledit premier échangeur de chaleur 12 peut être notamment couplé avec un ventilateur 18 qui permet le passage de l'air extérieur au travers de ce dernier en cas de faible vitesse ou d'arrêt du véhicule automobile. Le second échangeur de chaleur 16 est quant à lui placé à l'intérieur d'un boitier de climatisation 2. Le compresseur 10 est placé en sortie du second échangeur de chaleur 16 et la vanne d'expansion 14 en entrée de ce dernier. Lorsque la boucle de climatisation est en mode climatisation et refroidit l'air destiné à l'habitacle, le premier échangeur de chaleur 12 est un condenseur cédant de l'énergie calorifique à l'air afin de permettre le passage du fluide caloporteur d'une phase gazeuse à liquide et le second échangeur de chaleur 16 est un évaporateur captant de l'énergie calorique à l'air destiné à habitacle afin de permettre le passage du fluide caloporteur d'une phase liquide à gazeuse.

Le boitier de climatisation 2 comporte quant à lui une chambre de mixage 26 et des conduits de distribution d'air 30A, 30B, 30C. Un ventilateur 22 peut également être placé en amont du boitier de climatisation 2 afin de propulser l'air au travers dudit boitier de climatisation 2.

L'air destiné à l'habitacle est propulsé par le ventilateur 22, passe au travers du second échangeur de chaleur 16, et arrive dans la chambre de mixage 26. L'entrée de l'air dans ladite chambre de mixage 26 est contrôlée et régulée par un volet de mixage 24. L'orientation du volet de mixage 24 permet de guider l'air destiné à l'habitacle soit directement vers les conduits de distribution, l'air dans ce cas est froid, ou bien au travers d'un réchauffeur 32, par exemple un dispositif de chauffage électrique additionnel à coefficient de température positif, l'air dans ce cas est réchauffé. Il existe aussi une position intermédiaire pour laquelle l'air passe de part et d'autre du volet de mixage 24, ce qui permet le mélange d'un air froid avec un air réchauffé dans la chambre de mixage 26. Depuis la chambre de mixage, l'air destiné à l'habitacle est distribué au moyen de volets d'obturation 28 aux zones de l'habitacle via les conduits de distributions d'air 30A, 30B et 30C. Par exemple, le conduit de distribution d'air 30A guide l'air vers des sorties d'air sous pare-brise, le conduit de distribution d'air 30B vers des sorties en façade du tableau de bord et le conduit de distribution d'air 30c vers des sorties d'air sous le tableau de bord en direction des pieds.

Le boitier de climatisation 2 comporte en outre, au moins un élément destiné au refroidissement de l'air du véhicule. Cet élément comprend un matériau à changement de phase composite 40 dont la structure est illustrée aux figures 2a, 2b. Ledit matériau à changement de phase composite 40 est constitué d'au moins un premier matériau qui est un matériau à changement de phase 42 et un second matériau 44 dont la structure forme une matrice de support dudit matériau à changement de phase. Le matériau à changement de phase composite 40 est tel que grâce à sa structure composite il conserve une structure rigide quelque soit l'état solide ou liquide du matériau à changement de phase 42.

L'utilisation d'un matériau à changement de phase composite 40 permet de garantir une conductivité thermique accrue par rapport à un matériau à changement de phase intégré au sein du second échangeur de chaleur 16, ainsi qu'une bonne tenue mécanique.

Le matériau à changement de phase composite 40 est recouvert d'une couche de protection 46 thermo-conductrice empêchant la fuite du matériau à changement de phase 42 que se soit par écoulement ou par évaporation. Le fait que la couche de protection 46 soit thermo-conductrice permet de conserver un bon échange thermique entre le flux d'air passant au contact du matériau à changement de phase composite 40 et le matériau à changement de phase 42. Afin de garder une bonne conduction thermique entre le milieu extérieur et le matériau à changement de phase composite 40, la couche de protection 46 a une épaisseur de 0 à 100µm.

La couche de protection 46 thermo-conductrice, peut notamment être :
- une couche de fibres de carbone,
- un traitement de surface oleophobe et hydrophobe de nanoparticules hybrides organiques/inorganiques,
- un film métallique à haute conductivité thermique, ou encore
- une couche évaporative de polymère thermo-conducteur.

Une couche de protection 46 sous forme d'une couche de fibres de carbone ou d'un film métallique à haute conductivité thermique, a notamment une épaisseur supérieure ou égale à 20µm tandis qu'une couche de protection 46 sous forme d'un traitement de surface ou d'une couche évaporative de polymère thermo-conducteur, a une épaisseur inférieure à 20µm.

Une couche de protection 46 épaisse a une conduction thermique plus faible mais un pouvoir de protection plus important et inversement, une couche de protection plus fine a une meilleure conduction thermique mais un pouvoir de protection moindre. Ainsi le choix du type de couche de protection 46 est dépendant du placement du matériau à changement de phase composite 40 au sein du dispositif d'air conditionné 1.

Le matériau à changement de phase 42 utilisé dans le matériau à changement de phase composite 40 peut notamment être un matériau à changement de phase organique ou inorganique végétale ou d'autre origine. Il a de préférence une température de fusion comprise entre 9 et 13°C. De plus, afin de garantir une grande capacité de stockage d'énergie et donc de prélèvement de chaleur à l'air destiné à l'habitacle, ledit matériau à changement de phase a avantageusement une chaleur latente comprise entre 100 et 300KJ/Kg.

Le second matériau 44 formant matrice de support du matériau à changement de phase 42 au sein du matériau à changement de phase composite 40 peut être une matrice de fibres capillaires de carbone ou de polymère.

Comme montré par la figure 2b, le matériau à changement de phase composite 40 comporte en son sein, conformément à l'invention, au moins un renfort de structure rigide 48. Ce renfort de structure rigide 48 donne au matériau à changement de phase composite 40 une meilleur tenue mécanique. Le renfort de structure rigide 48 peut être par exemple une armature métallique ou encore une armature plastique englobée dans le matériau à changement de phase composite 40.

Selon un premier mode de réalisation de l'invention illustré à la figure 1, l'élément destiné au refroidissement de l'air du véhicule comprenant le matériau à changement de phase composite 40 entoure au moins partiellement le second échangeur de chaleur 16. Ainsi, lors d'un arrêt de la boucle de climatisation, l'air destiné à l'habitacle, traversant l'échangeur de chaleur, continue d'être refroidie grâce au transfert d'énergie calorifique entre l'air et le second échangeur de chaleur 16. Cette énergie calorifique, au lieu d'être évacuée par le fluide caloporteur, est absorbée par le matériau à changement de phase composite 40, dans lequel le matériau à changement de phase passe d'un état solide à liquide.

Selon une variante de ce premier mode de réalisation, le matériau à changement de phase composite 40 est utilisé comme matériau pour réaliser le support du second échangeur de chaleur 16.

Cette configuration autour du second échangeur de chaleur 16 permet notamment de limiter la place nécessaire à l'intégration du matériau à changement de phase composite 40 dans le boitier de climatisation 2.

L'élément destiné au refroidissement de l'air du véhicule comportant le matériau à changement de phase composite 40 peut également être placé en aval du second échangeur de chaleur 16 au sein du conduit d'arrivée d'air 2 et ainsi être en contact direct avec l'air destiné à l'habitacle et donc échanger efficacement de l'énergie calorifique avec lui et donc améliorer le confort de l'utilisateur en cas d'arrêt de la boucle de climatisation. Pour cela, le matériau à changement de phase composite 40 est avantageusement placé en aval du second échangeur de chaleur 16.

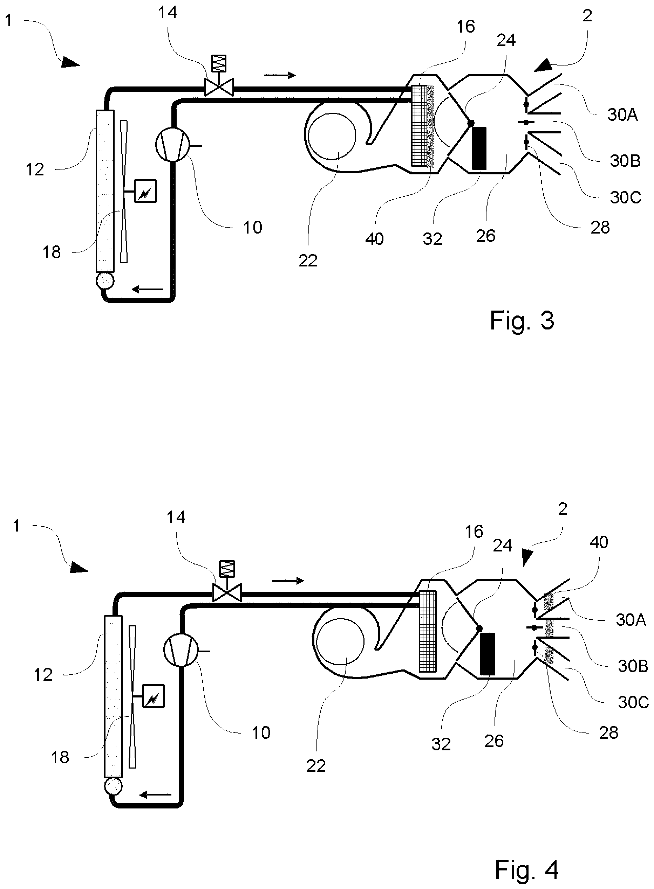

Selon un second mode de réalisation, illustré à la figure 3, le matériau à changement de phase composite 40 est placé entre le second échangeur de chaleur 16 et la chambre de mixage et de redistribution 26.

Selon un troisième mode de réalisation, illustré à la figure 4, l'élément destiné au refroidissement de l'air du véhicule comportant le matériau à changement de phase composite 40 est placé à l'intérieur des conduits de distribution d'air 30A, 30B, 30C. Cela permet de limiter la place nécessaire au matériau à changement de phase composite 40 dans le boitier de climatisation

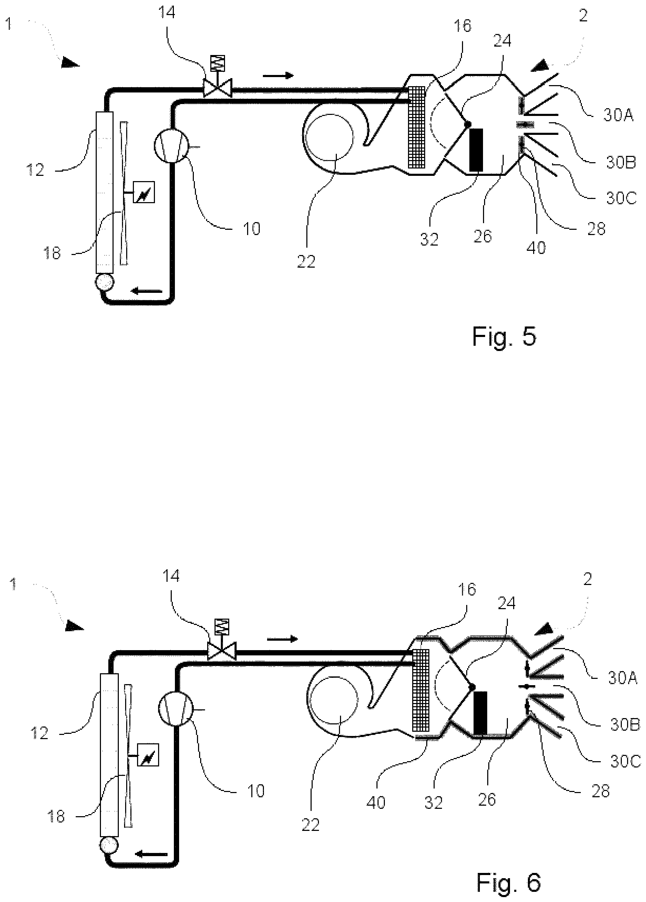

Selon un quatrième mode de réalisation, illustré par la figure 5, l'élément destiné au refroidissement de l'air du véhicule comportant le matériau à changement de phase composite 40 est intégré aux volets d'obturation 28. Cela permet de limiter la place nécessaire au matériau à changement de phase composite 40 dans le boitier de climatisation 2 et limite les perturbations du flux d'air.

Le matériau à changement de phase composite 40 peut avantageusement former lesdits volets d'obturation 28 dans un souci de facilité de fabrication et d'économie.

Selon un cinquième mode de réalisation, illustré par la figure 6, l'élément destiné au refroidissement de l'air du véhicule comportant le matériau à changement de phase composite 40 est intégré à la paroi même du boitier de climatisation 2. De même, cela permet de limiter la place nécessaire au matériau à changement de phase composite 40 dans le boitier de climatisation 2 et limite les perturbations du flux d'air.

Le matériau à changement de phase composite 40 peut également et avantageusement former la paroi du boitier de climatisation 2, toujours dans un souci de facilité de fabrication et d'économie.

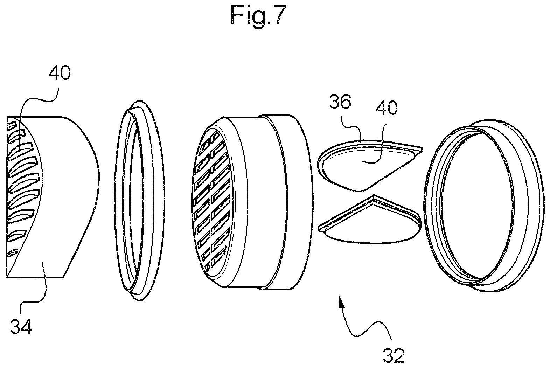

Selon un sixième mode de réalisation, illustré par la figure 7, l'élément destiné au refroidissement de l'air du véhicule comportant le matériau à changement de phase composite 40 est placé au niveau du diffuseur d'air 32 dans l'habitacle. Le matériau à changement de phase 40 peut ainsi former une grille de diffusion 34 à la sortie du diffuseur d'air 32 dans l'habitacle ou encore former des volets d'orientation et/ou de fermeture 36 du flux d'air arrivant dans l'habitacle.

Ainsi, on voit bien que du fait de l'application d'une couche de protection thermo-conductrice, le matériau à changement de phase composite gagne en durabilité car le matériau à changement de phase qu'il contient reste en son sein.

## Revendications

1. Elément destiné au refroidissement de l'air d'un véhicule automobile, comportant un matériau à changement de phase composite (40) constitué d'au moins un premier matériau qui est un matériau à changement de phase (42) et d'un second matériau (44) dont la structure forme une matrice de support dudit matériau à changement de phase (42), **caractérisé en ce que** ledit matériau à changement de phase composite (40) est recouvert d'une couche de protection (46) thermo-conductrice et **en ce que** le matériau à changement de phase composite (40) comporte en son sein au moins un renfort de structure rigide (48).

2. Elément selon la revendication 1, **caractérisé en ce que** la couche de protection (46) est une couche de fibres de carbone.

3. Elément selon la revendication 1, **caractérisé en ce que** la couche de protection (46) est un traitement de surface oléophobe et hydrophobe de nanoparticules hybrides organiques/inorganiques.

4. Elément selon la revendication 1, **caractérisé en ce que** la couche de protection (46) est un film métallique à haute conductivité thermique.

5. Elément selon la revendication 1, **caractérisé en ce que** la couché de protection (46) est une couche évaporative de polymère thermo-conducteur.

6. Elément selon l'une quelconque des revendications précédentes, **caractérisé en ce que** le renfort de structure rigide (48) est une armature métallique.

7. Elément selon l'une quelconque des revendications 1 à 5, **caractérisé en ce que** le renfort de structure rigide (48) est une armature plastique.

8. Dispositif d'air conditionné (1) pour véhicule automobile comportant une boucle d'air conditionné comprenant un premier échangeur de chaleur (12) en contact avec l'air extérieur et un second échangeur de chaleur (16) placé dans un boîtier de climatisation (2), **caractérisé en ce qu'**il comprend au moins un élément destiné au refroidissement de l'air selon l'une quelconque des revendications 1 à 7, ledit élément étant placé au niveau du diffuseur d'air (32) dans l'habitacle.

9. Dispositif d'air conditionné (1) selon la revendication 8, **caractérisé en ce qu'**au moins un élément destiné au refroidissement de l'air forme une grille de diffusion (34) à la sortie du diffuseur d'air (32) dans l'habitacle.

10. Dispositif d'air conditionné (1) selon la revendication 8 ou 9, **caractérisé en ce qu'**au moins un élément destiné au refroidissement de l'air forme des volets d'orientation et/ou de fermeture (36) du flux d'air arrivant dans l'habitacle.

## Patentansprüche

1. Element, welches zur Kühlung der Luft eines Kraftfahrzeugs bestimmt ist, umfassend ein Phasenänderungs-Verbundmaterial (40), welches aus mindestens einem ersten Material, das ein Phasenänderungsmaterial (42) ist, und aus einem zweiten Material (44), dessen Struktur eine Trägermatrix des Phasenänderungsmaterials (42) bildet, besteht,
**dadurch gekennzeichnet, dass** das Phasenänderungs-Verbundmaterial (40) mit einer wärmeleitenden Schutzschicht (46) bedeckt ist, und dadurch, dass das Phasenänderungs-Verbundmaterial (40) in seinem Inneren mindestens eine steife Strukturverstärkung (48) umfasst.

2. Element nach Anspruch 1,
**dadurch gekennzeichnet, dass** die Schutzschicht (46) eine Schicht aus Kohlefasern ist.

3. Element nach Anspruch 1,
**dadurch gekennzeichnet, dass** die Schutzschicht (46) eine oleophobe und hydrophobe Oberflächenbehandlung mit hybriden organischen/anorganischen Nanoteilchen ist.

4. Element nach Anspruch 1,
**dadurch gekennzeichnet, dass** die Schutzschicht (46) ein Metallfilm mit hoher Wärmeleitfähigkeit ist.

5. Element nach Anspruch 1,
**dadurch gekennzeichnet, dass** die Schutzschicht (46) eine evaporative Schicht aus wärmeleitendem Polymer ist.

6. Element nach einem der vorhergehenden Ansprüche,
**dadurch gekennzeichnet, dass** die steife Strukturverstärkung (48) eine metallische Bewehrung ist.

7. Element nach einem der Ansprüche 1 bis 5,
**dadurch gekennzeichnet, dass** die steife Strukturverstärkung (48) eine Kunststoffbewehrung ist.

8. Klimatisierungsvorrichtung (1) für ein Kraftfahrzeug, umfassend einen Klimatisierungskreislauf, umfassend einen ersten Wärmetauscher (12) in Kontakt mit der Außenluft und einen zweiten Wärmetauscher (16), der in einem Klimatisierungsgehäuse (2) platziert ist,
**dadurch gekennzeichnet, dass** diese mindestens ein Element, das zur Kühlung von Luft bestimmt ist, nach einem der Ansprüche 1 bis 7 umfasst,
wobei das Element auf der Höhe eines Luftverteilers (32) im Innenraum platziert ist.

9. Klimatisierungsvorrichtung (1) nach Anspruch 8,
**dadurch gekennzeichnet, dass** mindestens ein Element, das zur Kühlung von Luft bestimmt ist, ein Verteilungsgitter (34) am Ausgang des Luftverteilers (32) im Innenraum bildet.

10. Klimatisierungsvorrichtung (1) nach Anspruch 8 oder 9,
**dadurch gekennzeichnet, dass** mindestens ein Element, das zur Kühlung von Luft bestimmt ist, Klappen (36) zur Orientierung und/oder zum Verschließen des Luftstroms bildet, der im Innenraum ankommt.

## Claims

1. Element intended for cooling the air of a motor vehicle, having a composite phase-change material (40) made up of at least one first material, which is a phase-change material (42), and a second material (44), the structure of which forms a support matrix for said phase-change material (42), **characterized in that** said composite phase-change material (40) is covered with a thermally conductive protective layer (46), and **in that** the composite phase-change material (40) has at least one reinforcer (48) of rigid structure within it.

2. Element according to Claim 1, **characterized in that** the protective layer (46) is a layer of carbon fibres.

3. Element according to Claim 1, **characterized in that** the protective layer (46) is an oleophobic and hydrophobic surface treatment of hybrid organic/inorganic nanoparticles.

4. Element according to Claim 1, **characterized in that** the protective layer (46) is a highly thermally conductive metal film.

5. Element according to Claim 1, **characterized in that** the protective layer (46) is an evaporative layer of thermally conductive polymer.

6. Element according to any one of the preceding claims, **characterized in that** the reinforcer (48) of rigid structure is a metal reinforcement.

7. Element according to any one of Claims 1 to 5, **characterized in that** the reinforcer (48) of rigid structure is a plastic reinforcement.

8. Air-conditioner device (1) for a motor vehicle, having an air-conditioner loop comprising a first heat exchanger (12) in contact with the outside air and a second heat exchanger (16) positioned in an air-conditioning housing (2), **characterized in that** it comprises at least one element intended for cooling the air according to any one of Claims 1 to 7, said element being positioned in the region of the air diffuser (32) in the passenger compartment.

9. Air-conditioner device (1) according to Claim 8, **characterized in that** at least one element intended for cooling the air forms a diffusion grille (34) at the outlet of the air diffuser (32) in the passenger compartment.

10. Air-conditioner device (1) according to Claim 8 or 9, **characterized in that** at least one element intended for cooling the air forms flaps (36) for orienting and/or closing off the air flow passing into the passenger compartment.
